# EUROPEAN PATENT SPECIFICATION

(11) **EP 1 752 698 B1**
(45) Date of publication and mention of the grant of the patent: **11.06.2008**
(21) Application number: 06118627.6
(22) Date of filing: 08.08.2006
(51) Int. Cl.: F16L 41/03, F16L 47/32

(54) **Manifold of the perfected type**
Sammelrohr
Collecteur pour tuyaux

(30) Priority: 09.08.2005 IT TO20050570
(43) Date of publication of application: 14.02.2007
(73) Proprietor: RECANATI S.R.L., Villadose (RO) (IT)
(72) Inventor: Rimbano, Marta, 45010 Villadose (IT)
(74) Representative: Jorio, Paolo

(56) References cited:
- WO-A-00/57097
- AU-A- 4 400 668
- GB-A- 1 080 081
- US-B1- 6 676 166

## Description

The present invention relates to a manifold of the perfected type for transferring fluids.
As known, manifolds for transferring fluids comprise a main channel from which a plurality of secondary channels which carry the fluid towards a user branch off. Such manifolds are installed at a certain depth under ground and for this reason are made of plastic. Indeed, if they were made of metallic material, the manifolds would be subject to corrosion due to the electrical currents dispersed in the ground and to aggressive substances possibly present in the soil. If on one side, making the manifold in plastic material prevents corrosion, on the other hand the plastic material, in particular at the branching channel attachments, presents positively lower mechanical features, to the extent that at such attachments cracks and consequently leakage of fluid may occur in time. The patent US 6 676 166 discloses a plastic pipe coupling system including a female coupling and a support metallic ring

It is the object of the present invention to make a manifold of the perfected type which is free from the above-mentioned drawbacks.

According to the present invention, a manifold of the perfected type is made according to claim 1.

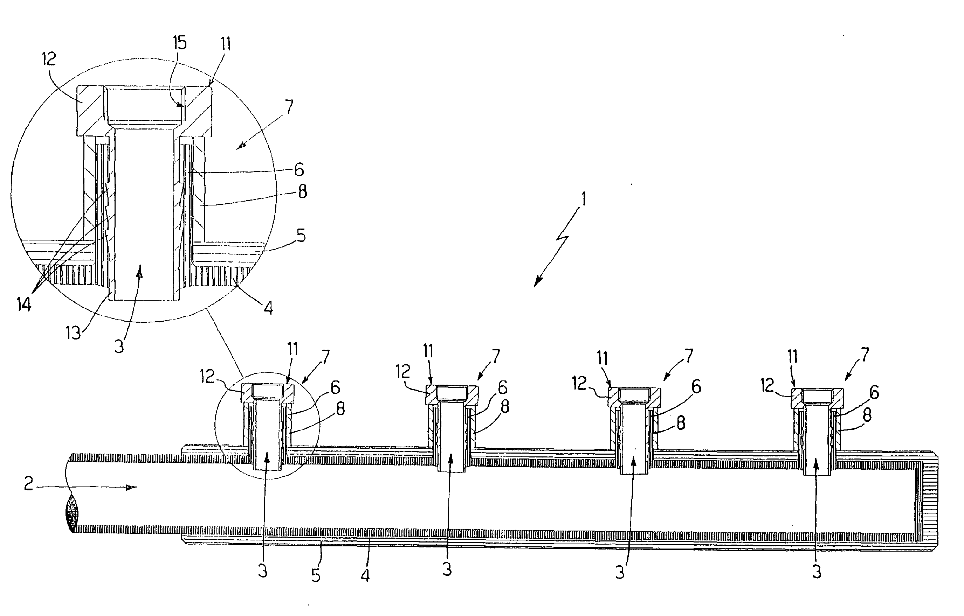

The present invention will now be described with reference to the attached drawing which illustrates in cross-section a preferred embodiment of a manifold shown by 1 as a whole.

Manifold 1 is a member for channelling a fluid from a source to one or more users. Manifold 1 comprises a main channel 2 from which several secondary channels 3 which channel the fluid towards the user branch off. Main channel 2 is defined within a conduit 4 made of plastic material and preferably of thermoplastic material on which is made, preferably by overmoulding, a layer 5 preferably of thermosetting plastic material. Secondary channels 3 are defined within the respective conduits 6 which originate from the main conduit 4 orthogonally to this. Conduits 6 are preferably made of polyethylene and are integral with the main conduit 4.

For each secondary channel 3, manifold 1 presents a union 7 which allows to establish the connection between the secondary conduits 6 and conduits not shown which channel the fluid towards the user. Union 7 comprises a metallic sleeve 8 fitted on conduit 6 until it comes into contact with layer 5; the internal diameter of sleeve 8 being essentially equal to the external diameter of conduit 6.

Preferably, sleeve 8 presents a protective rust-proof paint coating.

Union 7 further comprises an axially hollow metallic body 11 presenting an hexagonally shaped head 12 and a shank 13 whose external diameter is essentially equal to the internal diameter of conduit 6. Shank 13 presents a plurality of annular appendixes 14 (saw-shaped in cross-section) whose maximum extension diameter is larger than the internal diameter of conduit 6. A threaded segment 15 adapted to be engaged in a corresponding threaded segment of the conduit (not shown) which channels the fluid towards the user is internally made at head 12. In use, shank 13 is driven by interference in conduit 6 until head 12 comes into contact with the axial end of sleeve 8. For this type of assembly, the material with which conduit 6 is made deforms adapting itself to the external shape of shank 13 because it cannot be deformed outwards as such deformation is precluded by sleeve 8. Body 11 turns about its longitudinal axis and this allows, once connected to the conduit which channels the fluid towards the user, to establish a connection by turning head 12 from the angular position of the conduit which channels the fluid towards the user.

According to that described above, the advantages obtained by implementing the present invention are apparent and numerous.

In particular, for branching conduits, it is made a manifold provided with easily and rapidly assembled attachments which ensure a high mechanical strength connection. Furthermore, the angular position of the conduit which channels the fluid towards the user may be adjusted.

It is finally apparent that changes and variants can be made to the manifold 1 here described and shown without however departing from the protective scope of the present innovation.

In particular, the secondary conduits may be aligned all on one side or on opposite sides and their number may be different from that shown. Furthermore, at least one secondary conduit could be in line with the main conduit.

## Claims

1. A manifold of the perfected type is made comprising a main conduit (4) made of plastic material, at least one secondary conduit (6) integrally made with said main conduit (4), and a union (7) installed at said secondary conduit (6) for connecting a conduit directed to a user and comprising a metallic sleeve (8) fitted on said secondary conduit (6), **characterised in that** said union (7) comprises an axially hollow metallic body (11) presenting a head (12) within which the connection is obtained by screwing onto the conduit directed to the user and a shank (13) driven into said secondary conduit (6).

2. A manifold according to claim 1, **characterised in that** the internal diameter of said sleeve (8) is essentially equal to the external diameter of said secondary conduit (6).

3. A manifold according to claim 2, **characterised in that** the external diameter of said shank (13) is essentially equal to the internal diameter of said secondary conduit (6).

4. A manifold according to claim 3, **characterised in that** said shank (13) presents at least one annular appendix (14) whose maximum external diameter is larger than the internal diameter of said secondary conduit (6).

5. A manifold according to claim 4, **characterised in that** said appendix (14) in section presents a saw-shaped conformation.

6. A manifold according to any of the preceding claims, **characterised in that** said main conduit (4) and said secondary conduit are made of thermoplastic material.

7. A manifold according to claim 6, **characterised in that** said main conduit (4) is coated with a layer (5) preferably made of thermosetting plastic material.

## Patentansprüche

1. Ein Sammelrohr der ausgereiften Konstruktion ist hergestellt, umfassend ein Hauptleitungsrohr (4), das aus Kunststoff hergestellt ist, mindestens ein sekundäres Leitungsrohr (6), das mit dem Hauptleitungsrohr (4) als Einheit hergestellt ist, und einen Verbindungsstutzen (7), der an dem sekundären Leitungsrohr (6) angebracht ist, um ein Leitungsrohr anzuschließen, das zu einem Benutzer gerichtet ist, und der eine Metallhülse (8) umfasst, die auf dem sekundären Leitungsrohr (6) angebracht ist, **dadurch gekennzeichnet, dass** der Verbindungsstutzen (7) umfasst: einen axialen hohlen Metallkörper (11), der einen Kopf (12) darbietet, in dem der Anschluss erhalten wird, indem das zum Benutzer gerichtete Leitungsrohr angeschraubt wird, und einen Schaft (13), der in das sekundäre Leitungsrohr (6) getrieben ist.

2. Sammelrohr nach Anspruch 1, **dadurch gekennzeichnet, dass** der Innendurchmesser der Hülse (8) im Wesentlichen gleich dem Außendurchmesser des sekundären Leitungsrohrs (6) ist.

3. Sammelrohr nach Anspruch 2, **dadurch gekennzeichnet, dass** der Außendurchmesser des Schafts (13) im Wesentlichen gleich dem Innendurchmesser des sekundären Leitungsrohrs (6) ist.

4. Sammelrohr nach Anspruch 3, **dadurch gekennzeichnet, dass** der Schaft (13) mindestens ein ringförmiges Verlängerungsstück (14) darbietet, dessen maximaler Außendurchmesser größer als der Innendurchmesser des sekundären Leitungsrohrs (6) ist.

5. Sammelrohr nach Anspruch 4, **dadurch gekennzeichnet, dass** das Verlängerungsstück (14) im Schnitt einen sägeförmigen Bau darbietet.

6. Sammelrohr nach einem der vorangehenden Ansprüche, **dadurch gekennzeichnet, dass** das Hauptleitungsrohr (4) und das sekundäre Leitungsrohr aus thermoplastischem Material hergestellt sind.

7. Sammelrohr nach Anspruch 6, **dadurch gekennzeichnet, dass** das Hauptleitungsrohr (4) mit einer Schicht (5) beschichtet ist, die vorzugsweise aus Duroplast hergestellt ist.

## Revendications

1. Collecteur du type perfectionné, comprenant un conduit principal (4) réalisé en matière plastique, au moins un conduit secondaire (6) construit d'un seul tenant avec ledit conduit principal (4) et un raccord union (7) monté sur ledit conduit secondaire (6) pour raccorder un conduit dirigé vers un utilisateur et comprenant un manchon métallique (8) adapté sur ledit conduit secondaire (6), **caractérisé en ce que** ledit raccord union (7) comprend un corps métallique creux dans le sens axial (11) présentant une tête (12) à l'intérieur de laquelle le raccordement est obtenu par vissage sur le conduit dirigé vers l'utilisateur et une tige (13) enfoncée à l'intérieur dudit conduit secondaire (6).

2. Collecteur selon la revendication 1, **caractérisé en ce que** le diamètre interne dudit manchon (8) est sensiblement égal au diamètre externe dudit conduit secondaire (6).

3. Collecteur selon la revendication 2, **caractérisé en ce que** le diamètre externe de ladite tige (13) est sensiblement égal au diamètre interne dudit conduit secondaire (6).

4. Collecteur selon la revendication 3, **caractérisé en ce que** ladite tige (13) présente au moins un appendice annulaire (14) dont le diamètre externe maximal est supérieur au diamètre interne dudit conduit secondaire (6).

5. Collecteur selon la revendication 4, **caractérisé en ce que** ledit appendice (14) présente en coupe une configuration en dents de scie.

6. Collecteur selon l'une quelconque des revendications précédentes, **caractérisé en ce que** ledit conduit principal (4) et ledit conduit secondaire sont réalisés en matière thermoplastique.

7. Collecteur selon la revendication 6, **caractérisé en ce que** ledit conduit principal (4) est revêtu d'une couche (5) faite de préférence d'une matière plastique thermodurcissable.
